# EUROPEAN PATENT APPLICATION

(11) **EP 1 912 215 A1**
(43) Date of publication of application: **16.04.2008**
(21) Application number: 06782164.5
(22) Date of filing: 02.08.2006
(51) Int. Cl.: G11B 7/24, C09D 11/00

(54) **OPTICAL RECORDING MEDIUM AND INK COMPOSITION**

(30) Priority: 03.08.2005 JP 2005225376
(71) Applicant: Mitsubishi Kagaku Media Co., Ltd., Tokyo 108-0014 (JP); Jujo Chemical Co., Ltd., Tokyo 115-0055 (JP)
(72) Inventor: MATSUISHI, Fujio Mitsubishi Kagaku Media Co., Ltd., Tokyo; 1080014 (JP); HARAGUCHI, Kouichirou c/o Jujo Chemical Co., Ltd., Tokyo; 1150055 (JP)
(74) Representative: HOFFMANN EITLE
(86) International application number: PCT/JP2006/315295
(87) International publication number: WO 2007/015513

(57) **Abstract**

[Object]: An optical recording medium having a capability of high quality printing is provided by increasing the gloss level of a print-receiving layer formed on a label face thereof.

[Method to address the problem]: An optical recording medium 200 is **characterized in that** a print-receiving layer 20 capable of being printed with ink is disposed on the face opposite to the light incident side of a recording/reading functional layer 10 that is a substrate surface incident type medium; the print-receiving layer 20 has a filler-containing layer 22 containing as a main component a hydrophilic resin and an organic filler or inorganic filler and a filler-free layer 21 that is laminated on the filler-containing layer 22 and contains no organic filler or inorganic filler; and the filler-containing layer 22 is composed of a first filler-containing layer 222 disposed on the side of the recording/reading functional layer 10 and a second filler-containing layer 221 that is in contact with the filler-free layer 21 and contains an organic filler or inorganic filler in an amount larger than the amount contained in the first filler-containing layer 222.

## Description

### Technical Field

The present invention relates to an optical recording medium and the like, more specifically, to an optical recording medium having a print-receiving layer and the like.

### Background Art

In recent years, an optical recording medium such as CD-R, CD-RW, DVD-R, and recordable DVD has become a focus of attention as a large storage capacity recording medium for recording or reading a large amount of information using a laser light. On the label face (the face opposite to the face in which information is recorded by light irradiation) of the optical recording medium, a print-receiving layer capable of being printed with an inkjet ink (for example, a water-based ink typically) is disposed, and is used for indication of the content of the information recorded in the medium, and others.

In order to increase the gloss level of the print-receiving layer and to allow high quality printing with an inkjet ink, various processes have been reported so far. For example, following processes and others have been reported. In a cast-coating process (refer to Patent Document 1), a coating solution containing resin as a main component or a coating solution containing pigment and resin binder as a main component is coated on an ink-receiving layer; then, while the coating is wet, a heated mirror drum is pressed onto the coating so as to dry the coating. Further, in another process (refer to Patent Document 2), an ink-accepting layer having an excellent ink absorptivity is disposed on an optical recording medium; and a layer containing cationic organic particles is disposed on the ink-accepting layer. Further, in still another process (refer to Patent Document 3), an underlying layer is formed using a UV curable resin; and a glossy printable layer containing porous hydrated alumina particles is formed on the underlying layer. Further, in still another process (refer to Patent Document 4), an ink-receiving layer containing silica is formed.

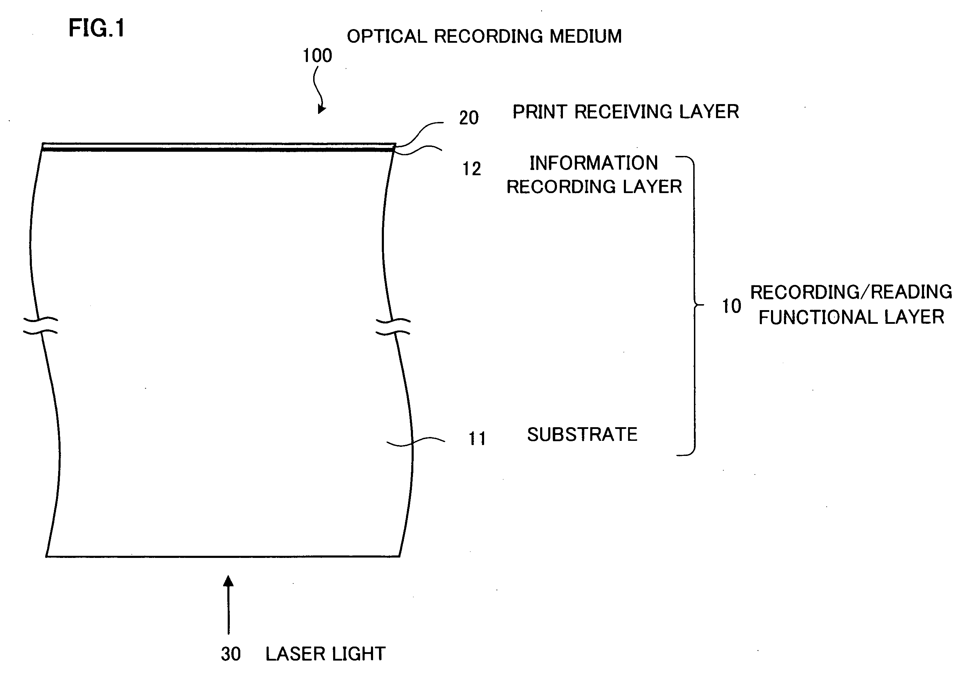

Patent Document 1: Japanese Patent Laid-Open Publication No. H11-296912 (refer to paragraph 0006, paragraph 0008, and FIG. 1),
Patent Document 2: Japanese Patent Laid-Open Publication No. 2002-133722 (refer to paragraph 0052, paragraph 0063, and paragraph 0064),
Patent Document 3: Japanese Patent Laid-Open Publication No. 2002-237103 (refer to paragraphs 0054 to 0060), and
Patent Document 4: Japanese Patent Laid-Open Publication No. 2003-123323 (refer to paragraphs 0009 to 0010 and paragraph 28).

### Disclosure of the Invention

### Problems to be Solved by the Invention

The gloss level of the print-receiving layer is evaluated, for example, as described in Patent Document 3, with reference to the 60-degree mirror face gloss level in accordance with JIS.
However, further studies performed by the present inventors have shown that the gloss level of the print-receiving layer evaluated with reference to the foregoing conventional standard is not always satisfactory, and further improvement is required in order to attain high quality printing.

Specifically, the 60-degree mirror face gloss level so far adopted as a reference for evaluation is not always appropriate, but the 20-degree mirror face gloss level has been shown to be appropriate as a evaluation index for evaluating an adequate gloss level on the basis of human eyes. Therefore, an optical recording medium having a high gloss level (high aesthetic value) on the basis of human eyes may be attained by enhancing the 20-degree mirror face gloss level.

The present invention has been made to address the above technical problems.
Namely, it is an object of the present invention to provide an optical recording medium having a capability of high quality printing by increasing the gloss level of a print-receiving layer disposed on a label face of the optical recording medium.
It is another object of the present invention to provide a UV curable ink composition.

### Method for Solving the Problems

In order to address the aforementioned problems, in the present invention, a print-receiving layer is disposed on the side opposite to the recording/reading light incident side of the optical recording medium. The print-receiving layer is composed of a filler-containing layer that contains a filler and a filler-free layer that contains no filler disposed on the side of a face to which ink is adsorbed at first.
The present invention provides the followings (1) to (17).
(1) An optical recording medium comprising: a recording/reading functional layer having a capability of at least recording or reading information by light irradiation; and a print-receiving layer having a capability of being printed with an ink, formed on the face opposite to the light incident face of the recording/reading functional layer; wherein the print-receiving layer has a filler-containing layer containing a filler, and a filler-free layer containing no filler disposed on the side of a faceon which the ink is adsorbed at first.
(2) The optical recording medium according to (1), wherein the print-receiving layer is composed of: a filler-containing layer containing an organic filler or an inorganic filler, disposed on the side of the recording/readingfunctional layer, and a filler-free layer containing no organic filler or inorganic filler, disposed on the faceon which the ink is adsorbed at first.
(3) The optical recording medium according to (1) or (2), wherein the gloss level of the face is, the ink being adsorbed at first on the face 30 or more.
(4) The optical recording medium according to any of (1) to (3), wherein the thickness of the print-receiving layer is 5 µm or more and 100 µm or less.
(5) The optical recording medium according to any of (1) to (4), wherein the print-receiving layer contains a UV curable resin.
(6) The optical recording medium according to any of (1) to (5), wherein the filler-free layer is composed of a single layer.
(7) The optical recording medium according to any of (1) to (6), wherein the filler-free layer contains a UV curable resin and a hydrophilic resin.
(8) The optical recording medium according to (7), where in the hydrophilic resin is an alkyl-modified polyvinylpyrrolidone.
(9) The optical recording medium according to any of (1) to (8), wherein the filler-containing layer has a first filler-containing layer formed on the side of the recording/reading functional layer and a second filler-containing layer formed on the side of the filler-free layer, the amount of the organic filler or inorganic filler contained in the second filler-containing layer being less than the amount of the organic filler or inorganic filler contained in the first filler-containing layer.
(10) The optical recording medium according to any of (1) to (9), wherein the filler-containing layer is composed of: the first filler-containing layer containing the organic filler or inorganic filler in an amount of from 30 wt% to 70 wt%, formed on the side of the recording/ reading functional layer, and the second filler-containing layer containing the organic filler or inorganic filler in an amount of from 1 wt% to 30 wt%, formed on the side of the filler-free layer.
(11) The optical recording medium according to any one of (1) to (10), wherein the filler-containing layer contains a UV curable resin, a hydrophilic resin, and an organic filler or inorganic filler.
(12) The optical recording medium according to (11), wherein the hydrophilic resin is a poly (vinylpyrrolidone-vinyl acetate) copolymer.

(13) A UV curable ink composition comprising: an alkyl-modified polyvinylpyrrolidone; a hydrophilic monomer; and a photo-polymerization initiator.
(14) The UV curable ink composition according to (13), further comprising a fixing agent.
(15) The UV curable ink composition according to (13) or (14), further comprising a polymerizable oligomer.
(16) The UV curable ink composition according to any of (13) to (15), further comprising a surfactant.
(17) The UV curable ink composition according to any of (13) to (16), comprising an alkyl-modified polyvinylpyrrolidone in an amount of 5 wt% or more and 50 wt% or less.

### Effect of the Invention

The optical recording medium according to the present invention has a capability of high quality printing on a label face of the optical recording medium.

### Best Mode for Carrying Out the Invention

Hereinafter, a best mode (exemplary embodiment) for carrying out the present invention will be explained with accompanied drawings. It should be construed that the present invention is in no way limited to the following exemplary embodiments, but may be carried out in various modes within the scope of the present invention. The accompanied drawings are used to explain the exemplary embodiments and do not show the actual sizes.

FIGURE 1 is a drawing (cross-sectional view) for explaining an optical recording medium 100 (a substrate surface incident type CD medium in this example) in accordance with the present exemplary embodiment. The optical recording medium 100 has a recording/reading functional layer 10 having at least a capability of recording or reading information by irradiation of laser light 30 and a print-receiving layer 20 having a capability of printing with a water-based ink such as an inkjet ink. As shown in FIG. 1, the print-receiving layer 20 is disposed on the side opposite to the laser light 30 incident side of the recording/reading functional layer 10. The recording/reading functional layer 10 has a substrate 11 made of a light transmitting material and an information recording layer 12 formed on the surface of the substrate 11. Although not shown in the figure, the laser light 30 is irradiated on the information recording layer 12 through an objective lens having a predetermined numerical aperture (NA). Here, in FIG. 1, the recording/reading functional layer 10 and the print-receiving layer 20 are in contact with each other, but it is needless to say that an underlying layer and the like described later may be interposed between the recording/reading functional layer 10 and the print-receiving layer 20.

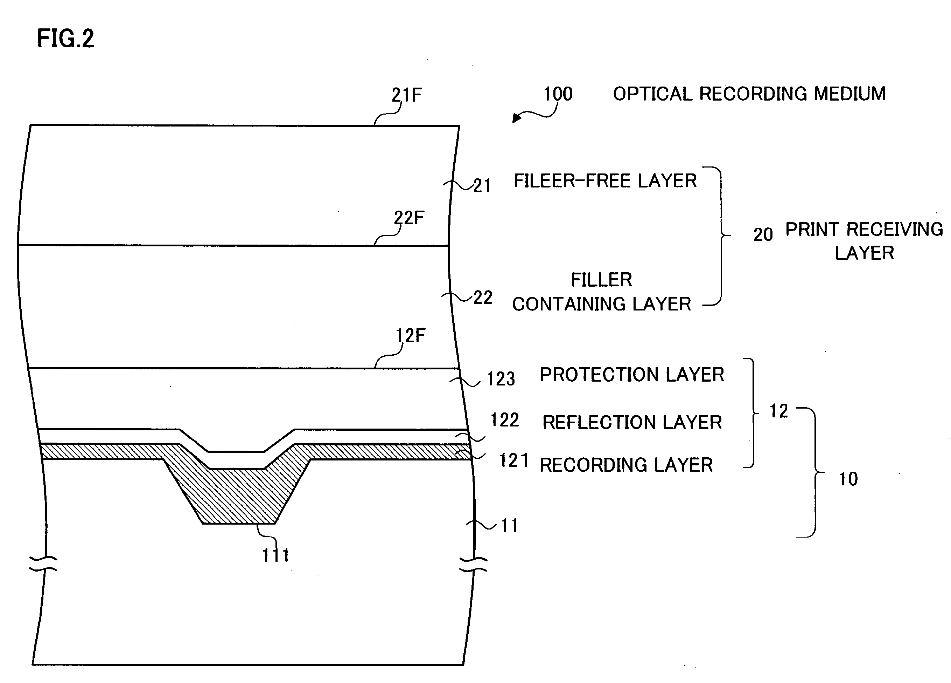

FIGURE 2 is a drawing. (cross-sectional view) for explaining the information recording layer 12 (CD-R is exemplified in this figure) formed on the surface of the substrate 11 in the optical recording medium 100 in accordance with the present exemplary embodiment, and the print-receiving layer 20. As shown in FIG. 2, the substrate 11 and the information recording layer 12 form the recording/reading functional layer 10. Further, as shown in FIG. 2, the information recording layer 12 is structured by laminating successively, on a predetermined tracking guide groove 111 formed on the surface of the substrate 11, a recording layer 121 containing an organic dye, a reflection layer 122 composed of metal such as Ag and Al, for example, and a protection layer 123 composed of a UV curable resin or the like.

The print-receiving layer 20 formed on the recording/reading functional layer 10 on the side opposite to the laser light incident side is composed of a filler-containing layer 22 containing an organic filler and/or an inorganic filler in a predetermined amount and a filler-free layer 21 that is formed on the surface 22F of the filler-containing layer and contains no organic filler and/or inorganic filler. An ink may be adsorbed on the print-receiving layer 20 in such a manner that the ink is adsorbed at first to the surface 21F of the filler-free layer 21.

### 1. Print-receiving layer

Next, the print-receiving layer 20 will be explained.
The print-receiving layer 20 in the optical recording medium 100 in accordance with the present exemplary embodiment, in the case of printing with a water-based ink, has a capability of adequate printing for practical use (specifically, printing with less bleeding of ink and sufficient drying speed). The print-receiving layer 20 is composed of the filler-containing layer 22 disposed on the side of the aforementioned recording/reading functional layer 10 and the filler-free layer 21 disposed on the side to which the ink is adsorbed at first.

Here, the "filler-containing layer" is a layer containing an organic filler or inorganic filler in a predetermined matrix. Use of the filler-containing layer 22 secures the gloss level and ink absorptivity of the print-receiving layer 20 surface, and enhances more easily the adhesion between the print-receiving layer 20 and the recording/reading functional layer 10. The filler-containing layer 22 may be structured single layered or multi-layered. Generally, the number of layers composing the filler-containing layer 22 is selected from 1 or more and 10 or less as appropriate. The number of layers composing the filler-containing layer 22 is preferably 5 or less and more preferably 4 or less. The number of layers composing the filler-containing layer 22 is preferably 2 or more. The most preferable structure of the filler-containing layer 22 is a two-layered one. Within the above ranges of the number of the layers composing the filler-containing layer 22, the filler-containing layer 22 may easily be subjected to functional separation or the like adequately while production efficiency is maintained.

Next, the "filler-free layer" is a layer containing substantially no organic filler or inorganic filler. Use of the filler-free layer 21 allows the print-receiving layer 20 surface to easily secure the gloss level while a predetermined ink absorptivity is kept. The filler-free layer 21 may be structured single layered or multi-layered. Generally, the number of layers composing the filler-free layer 21 is selected from 1 or more and 10 or less as appropriate. The number of layers composing the filler-free layer 21 is preferably 5 or less, more preferably 3 or less, and still more preferably 2 or less. The most preferable structure of the filler-free layer 21 is a single-layered one. Within the above ranges of the number of the layers composing the filler-free layer 21, the gloss level of the print-receiving layer 20 may be easily secured.

Materials that compose the print-receiving layer 20 will be explained next. Materials that compose the filler-containing layer 22 and the filler-free layer 21 are not particularly limited as long as the materials secure a predetermined gloss level, a predetermined ink absorptivity, and an adhesion to the recording/reading functional layer 10. From this viewpoint, the filler-containing layer 22 is preferably composed of a resin and an organic filler or inorganic filler as a main component. The filler-free layer 21 is preferably composed of a resin as a main component. Here, the main component is defined as the one that is contained in an amount of generally 50 wt% or more and preferably 70 wt% or more and in an amount of 99.9 wt% or less in the whole layer.

In the case where a resin is used as a material that composes the filler-containing layer 22 and the filler-free layer 21, a UV curable resin and a hydrophilic resin are preferably used in combination.
Here, a "hydrophilic" substance is defined generally as the one that has a hetero atom in the molecular structure thereof. The hydrophilic substance may include, for example, a hydrophilic resin, a hydrophilic oligomer (for example, a hydrophilic urethane acrylate), a hydrophilic monomer, or the like.

Specifically, the "hydrophilic resin" refers to a resin that has on the side chain thereof a substituent having a hetero atom. More specifically, the "hydrophilic resin" refers to a resin that has on the side chain thereof a substituent having oxygen, sulfur, phosphorus, or nitrogen. Still more specifically, the "hydrophilic resin" refers to, for example, a resin that has on the side chain thereof hydroxyl, ether, sulfonic acid, amino, carboxyl group, or the like.

Similarly, specifically, the "hydrophilic oligomer" refers to an oligomer that has in the molecule thereof a substituent having a heteroatom. More specifically, the "hydrophilic oligomer" refers to an oligomer that has in the molecule thereof a substituent having oxygen, sulfur, phosphorus, or nitrogen. Still more specifically, the "hydrophilic oligomer" refers to, for example, an oligomer that has in the molecule thereof hydroxyl, ether, sulfonic acid, amino, carboxyl group, or the like.

Further, specifically, the "hydrophilic monomer" also refers to a monomer that has in the molecule thereof a substituent having a hetero atom. More specifically, the "hydrophilic monomer" refers to a monomer that has in the molecule thereof a substituent having oxygen, sulfur, phosphorus, or nitrogen. Still more specifically, the "hydrophilic monomer" refers to, for example, a monomer that has in the molecule thereof hydroxyl, ether, sulfonic acid, amino, carboxyl group, or the like.

### (1) UV curable resin

### UV curable monomer:

As a UV curable resin that is a material composing the print-receiving layer 20, there may be mentioned a radical UV curable resin. As the radical UV curable resin, there may be used a composition that contains UV curable monomers and a photo-polymerization initiator as essential components. For the UV curable monomers, there may be used a mono-functional (meth)acrylate and a poly-functional (meth)acrylate as a polymerizable monomer component. Among the UV curable monomers, a hydrophilic monomer is preferable. The monomers may be used alone or in a combination of two or more kinds. Here, acrylate and methacrylate are combined together and referred to as (meth)acrylate.

Specifically, the mono-functional (meth)acrylate may include, for example, a (meth)acrylate and the like having a substituent such as methyl, ethyl, propyl, butyl, amyl, 2-ethylhexyl, octyl, nonyl, dodecyl, hexadecyl, octadecyl, cyclohexyl, benzyl, methoxyethyl, butoxyethyl, phenoxyethyl, nonylphenoxyethyl, tetrahydrofurfuryl, glycidyl, 2-hydroxyethyl, 2-hydroxypropyl, 3-chloro-2-hydroxypropyl, dimethylaminoethyl, diethylaminoethyl, nonylphenoxyethyl tetrahydrofurfuryl, caprolactone-modified tetrahydrofurfuryl, isobornyl, dicyclopentanyl, dicyclopentenyl, dicydlopentenyloxyethyl and the like.

As the multi-functional (meth)acrylate, there may be mentioned, for example, di(meth)acrylate such as 1,3-butylene glycol, 1,4-butanediol, 1,5-pentanediol, 3-methyl-1,5-pentanediol, 1,6-hexanediol, neopentyl glycol, 1,8-octanediol, 1,9-nonanediol, tricyclodecane dimethanol, ethylene glycol, polyethylene glycol, propylene glycol, dipropylene glycol, tripropylene glycol, polypropylene glycol and the like; di(meth)acrylate of tris(2-hydroxyethyl) isocyanurate; and the like.

Further, there may be mentioned, di(meth)acrylate of a diol obtained by adding 4 mol or more of ethylene oxide or propylene oxide to 1 mol of neopentyl glycol; another di(meth)acrylate of a diol obtained by adding 2 mol of ethylene oxide or propylene oxide to 1 mol of bisphenol A; a di- or tri(meth)acrylate of a triol obtained by adding 3 mol or more of ethylene oxide or propylene oxide to 1 mol of trimethylol propane; another di(meth)acrylate of a diol obtained by adding 4 mol or more of ethylene oxide or propylene oxide to 1 mol of bisphenol A; trimethylol propane tri(meth)acrylate; pentaerythritol tri(meth)acrylate; poly(meth)acrylate of dipentaerythritol; ethylene oxide-modified phosphoric acid (meth)acrylate; ethylene oxide-modified alkylated phosphoric acid (meth)acrylate; and the like.

In order to increase the cross-linking density of the UV curable resin composition, a cross-linking monomer may be contained. The cross-linking monomer may include trimethylolpropane tri(meth)acrylate, acrylated isocyanurate, 1,4-butanediol di(meth)acrylate, 1,6-hexanediol di(meth)acrylate, neopentylglycol di(meth)acrylate, dicyclopentadienyl di(meth)acrylate, pentaerythritol tetra(meth)acrylate, cyclodecane triacrylate, and the like.

In order to promote adsorption or absorption of ink, a hydrophilic monomer is preferably used as the UV curable monomer.
As the hydrophilic monomer, there may be mentioned, for example, a water-soluble acrylate monomer, a urethane acrylate oligomer, and the like. A specific example of the water-soluble acrylate monomer may include, for example, hydroxyethyl acrylate, 2-hydroxypropyl acrylate, ethoxydiethyleneglycol acrylate, methoxytriethyleneglycol acrylate, methoxypolyethyleneglycol acrylate, polyethyleneglycol diacrylate, modified trimethylolpropane triacrylate, acryloyl morpholine, N, N-dimethylaminoethyl acrylate, N,N-dimethyl acrylamide, N-methoxymethyl acrylamide, N-hydroxymethyl acrylamide, and the like.

Further, as a main component of the water-soluble acrylate monomer, there may be preferably contained at least one kind of N,N-dimethyl acrylamide, N-methoxymethyl acrylamide, N-hydroxymethyl acrylamide, and acryloyl morpholine. These water-soluble acrylate monomers may be used alone or in a combination of two or more kinds.

The UV curable monomer is contained in a coating solution used to form the print-receiving layer 20 in an amount generally 20 parts by weight or more, preferably 30 parts by weight or more, and more preferably 40 parts by weight or more, whereas the UV curable monomer is contained in the coating solution used to form the print-receiving layer 20 in an amount generally 70 parts by weight or less, preferably 60 parts by weight or less and more preferably 55 parts by weight or less. When the amount of the UV curable monomer is selected within the above ranges, adequate water resistance and adequate adhesion to the recording/reading functional layer 10 are easily attained. In particular, when the hydrophilic monomer is used as the UV curable monomer in the above ranges, the print-receiving layer 20 may attain sufficient ink acceptability easily.

### Polymerizable oligomer:

Along with the above UV curable monomer (polymerizable monomer), a polymerizable oligomer (in the present description, the polymerizable oligomer is referred to as an oligomer component in some cases) may be used in combination. The polymerizable oligomer may include polyester (meth)acrylate, polyether (meth)acrylate, epoxy (meth)acrylate, urethane (meth)acrylate, and the like. Among these, an oligomer of urethane (meth)acrylate (hereinafter, referred to as urethane acrylate oligomer in some cases) is preferably used.

By using the urethane acrylate oligomer, a cross-link structure may be incorporated into the print-receiving layer 20 after UV curing. In addition, by using the urethane acrylate oligomer, shrinking accompanied by UV curing may be easily reduced. Further, by using the urethane acrylate oligomer, the adhesion to the recording/reading functional layer 10 may be easily maintained.

Here, generally, the urethane acrylate oligomer refers to a hydrophobic one, but in order to improve the affinity to water, a polar group such hydroxyl, ether, amine, and carboxylic acid may be preferably introduced. Namely, by introducing the polar group, the resulting hydrophilic urethane acrylate oligomer may be easily mixed with water in an arbitrary ratio. Therefore, by using the hydrophilic urethane acrylate oligomer, the affinity to hydrophilic resins or hydrophilic monomers is improved, whereby the ink acceptability may be easily increased. Hereinafter, the hydrophobic urethane oligomer and the hydrophilic urethane acrylate oligomer will be explained.

The hydrophobic urethane acrylate oligomer is used mainly to form a predetermined cross-linking structure so as to increase the strength of a coating film, and is also used to enhance the adhesion to the recording/reading functional layer 10. Namely, by incorporating the hydrophobic urethane acrylate oligomer, not only a sufficient cross-linking structure may be developed, but also the adhesion to the recording/reading functional layer 10, reduction in shrinking accompanied by curing, water resistance, and scratch resistance may be easily provided.

The hydrophobic urethane acrylate oligomer is contained in the coating solution used to form the print-receiving layer 20 in an amount of generally 1 part by weight or more, preferably 2 parts by weight or more, more preferably 3 parts by weight or more, and still more preferably 3.5 parts by weight or more, whereas the hydrophobic urethane acrylate oligomer is contained in the coating solution used to form the print-receiving layer 20 in an amount of generally 20 parts by weight or less, preferably 15 parts by weight or less, more preferably 10 parts by weight or less, still more preferably 9 parts by weight or less, and particularly preferably 8 parts by weight or less.

Within the above ranges, a cross-linking structure providing a coating film with a sufficient strength may be easily formed, and the adhesion to the recording/reading functional layer 10 may be easily improved. In addition, the ink acceptability also may be easily improved.

The solubility of the hydrophobic urethane acrylate oligomer in water (25°C) is selected to be preferably less than 100 g/liter, more preferably less than 50 g/liter, and still more preferably less than 10 g/liter. The lower limit of the solubility is practically 0.1 g/liter.

The hydrophilic urethane acrylate oligomer is used mainly to form a predetermined cross-linking structure so as to increase the strength of a coating film and water resistance, and is also used to provide ink acceptability. Namely, by incorporating the hydrophilic urethane acrylate oligomer, a sufficient cross-linking structure may be easily developed. Accordingly, shrinking accompanied by curing in the print-receiving layer 20 is reduced, so that predetermined water resistance and scratch resistance may be easily provided. In addition, by using the hydrophilic urethane acrylate oligomer, the ink acceptability also may be easily enhanced.

The hydrophilic urethane oligomer is contained in the coating solution used to form the print-receiving layer 20 in an amount of generally 0.1 part by weight or more, preferably 0.5 part by weight or more, more preferably 1 part by weight or more, and still more preferably 1.5 parts by weight or more, whereas the hydrophilic urethane oligomer is contained in the coating solution used to form the print-receiving layer 20 in an amount of generally 30 parts by weight or less, preferably 25 parts by weight or less, more preferably 20 parts by weight or less, still more preferably 19 parts by weight or less, and particularly preferably 18 parts by weight or less.
Within the above ranges, a cross-linking structure providing a coating film with a sufficient strength may be easily formed. In addition, tackiness, water resistance, and the adhesion to the recording/reading functional layer 10 may be easily secured. Further, the ink acceptability also may be easily improved.

Specifically, the solubility of the hydrophilic urethane acrylate oligomer in water (25°C) is selected as preferably 100 g/liter or more, more preferably 300 g/liter or more, and still more preferably 1,000 g/liter or more. The upper limit of the solubility is practically 5,000 g/liter.

For the purpose of attaining a similar effect, besides the above urethane acrylate oligomers, in a preferred embodiment, a UV curable oligomer such as a polyester acrylate oligomer and an epoxy acrylate oligomer that exhibit hydrophilicity may be used in combination.

For the purpose of reducing shrinking accompanied by curing after the print-receiving layer 20 is cured by UV irradiation, as a component besides the aforementioned components, the following compounds may be further used. Namely, there may be preferably contained at least one kind selected from ethoxydiethylene glycol acrylate, methoxytriethylene glycol acrylate, methoxypolyethylene glycol acrylate, and polyethylene glycol diacrylate. These compounds are contained in an amount of generally 0 part by weight or more and 40 parts by weight or less in the coating solution that forms the print-receiving layer 20.

### Additive such as photo-polymerization initiator:

A photo-polymerization initiator may be used in the following manner.
The photo-polymerization initiator may include 1-[4-(2-hydroxyethoxy)phenyl]-2-hydroxy-2-methyl-1-propan-1-one, 2-hydroxy-2-methyl-1-phenylpropan-1-one, 2,2-diemthoxy-1,2-diphenylethan- 1-one, 1-hydroxycyclohexylphenyl ketone, benzophenone, 2-methyl- 1-[4-(methylthio)phenyl]-2-morpholinopropan- 1 -one, 2,4,6-trimethylbenzoyldiphenylphosphine oxide, 2-benzyl-2-dimethylamino-1-(4-morpholinophenyl) butanone-1, bis(2,4,6-trimethylbenzoyl)phenylphosphine oxide, oligo[2-hdyroxy-2-methyl-1-[4-(methylvinyl)phenyl]propanone], and the like. These compounds may be used alone or in a combination of two or more kinds.

The photo-polymerization initiator is contained in the coating solution that forms the print-receiving layer 20 in an amount of generally 1 part by weight or more, preferably 2 parts by weight or more, and more preferably 3 parts by weight or more, whereas the photo-polymerization initiator is contained in the coating solution that forms the print-receiving layer 20 in an amount of generally 15 part by weight or less, preferably 10 parts by weight or less, and more preferably 8 parts by weight or less.

. Within the above ranges, sufficient curing reaction may be attained during UV curing. As a result, the print-receiving layer 20 may be made easily a uniform structure. In addition, temporal degradation of the print-receiving layer 20 may be easily suppressed. Namely, excess photo-polymerization initiator contained may result in the temporal degradation of the print-receiving layer 20 in some cases because of the presence of unreacted residues after UV curing or excess progressing of cross-linking with time. Within the above ranges, the foregoing temporal degradation may be easily suppressed.

Along with the photo-polymerization initiator, a sensitizer may be used in combination for the UV curable resin. The sensitizer may include, for example, trimethylamine, methyldimethanolamine, triethanolamine, p-diethylaminoacetophenone, ethyl p-diemethylaminobenzoate, isoamyl p-dimethylaminobenzoate, N,N-dimethylbenzylamine, 4,4'-bis(diethylamino) benzophenone, and the like.

As the other additives that are contained optionally, there may be mentioned a thermal-polymerization inhibitor; an anti-oxidant represented by hindered phenol, hindered amine, phosphite, and the like; a plasticizer; a silane coupling agent represented by epoxysilane, mercaptosilane, (meth)acrylsilane, and the like. These additives may be contained so as to improve various properties. These additives are selected from those that have an excellent solubility to the UV curable resin and do not bring an adverse effect of preventing UV transmission.

### In the case of using UV curable resin in filler-free layer 21:

The UV curable resin is used in the filler-free layer 21, by using the aforementioned materials, more preferably in the following manner.
Firstly, from the viewpoint of lowering the viscosity of the coating solution before coating, it is preferable that the content of the polymerizable oligomer is reduced. Among the polymerizable oligomers, it is preferable that the content of the hydrophilic oligomer such as a hydrophilic urethane acrylate is reduced. Specifically, the polymerizable oligomer is contained in the coating solution that forms the filler-free layer 21 in an amount of preferably 20 wt% or less and more preferably 10 wt% or less, whereas the polymerizable oligomer is contained in the coating solution that forms the filler-free layer 21 in an amount of preferably 0 wt% or more.

On the other hand, in order to increase the ink acceptability of the print-receiving layer 20, it is preferable that the amount of the hydrophilic monomer contained in the filler-free layer 21 is increased. Specifically, the hydrophilic monomer is contained in the coating solution that forms the filler-free layer 21 in an amount of preferably 40 wt% or more and more preferably 50 wt% or more, whereas the hydrophilic monomer is contained in the coating solution that forms the filler-free layer 21 in an amount of generally 80 wt% or less and preferably 70 wt% or less.

### In the case of using UV curable resin in filler-containing layer 22:

The UV curable resin is used in the filler-containing layer 22, by using the aforementioned materials, more preferably in the following manner.
Firstly, from the viewpoint of increasing the ink acceptability, it is preferable that the hydrophilic urethane oligomer is used in a predetermined amount. The hydrophilic urethane oligomer is contained in the coating solution that forms the filler-containing layer 22 in an amount of preferably 1 wt% or more and more preferably 2 wt% or more, whereas the hydrophilic urethane oligomer is contained in the coating solution that forms the filler-containing layer 22 in an amount of preferably 30 wt% or less and more preferably 20 wt% or less.

Furthermore, from the viewpoint of securing the adhesion to the recording/reading functional layer 10, it is preferable that the hydrophobic urethane oligomer is used in a predetermined amount. The hydrophobic urethane oligomer is contained in the coating solution that forms the filler-containing layer 22 in an amount of preferably 1 wt% or more and more preferably 5 wt% or more, whereas the hydrophobic urethane oligomer is contained in the coating solution that forms the filler-containing layer 22 in an amount of preferably 20 wt% or less and more preferably 15 wt% or less.

Further, from the viewpoint of controlling precisely the ink acceptability, it is preferable that the hydrophilic monomer is also contained in a predetermined amount. The hydrophilic monomer is contained in the coating solution that forms the filler-containing layer 22 in an amount of preferably 20 wt% or more, more preferably 30 wt% or more, and still more preferably 35 wt% or more, whereas the hydrophilic monomer is contained in the coating solution that forms the filler-containing layer 22 in an amount of preferably 60 wt% or less and more preferably 50 wt% or less.

### (2) Hydrophilic resin

A hydrophilic resin is used in the following manner.
An example of the hydrophilic resin may include polyethylene oxide, polyvinylalchol, polyvinylmethylether, polyvinylformal, carboxyvinylpolymer, hydroxyethyl cellulose, hydroxypropyl cellulose, methyl cellulose, carboxymethyl cellulose sodium salt, polyvinylpyrrolidone, poly(vinylpyrrolidone-vinyl acetate) copolymer, alkyl-modified polyvinylpyrrolidone, ketone resin, styrene-maleic anhydride copolymer, shellac, dextrin, poly(pyrrolidonylethyl acrylate), polyacrylic acid and its metal salt, polyamine, polyacrylamide, polyethylene glycol, polydiethylaminoethyl (meth)acrylate, polyhydroxy styrene, polyvinylalkyl ether, polyvinylhydroxy benzoate, polyphthalic acid, cellulose acetate hydroxydiene phthalate, water-soluble alkyd, water-soluble polyester, water-soluble polyepoxy, polyamide, polyvinylmethyl ether, saponified polyvinyl acetate, carboxymethyl cellulose, carboxymethyl cellulose sodium salt, gum arabic, guar gum, sodium alginate, and the like. Further, for example, graft polymers (LH-40, manufactured by Soken Chemical & Engineering Co., Ltd.) that are composed of a methylmethacrylate main chain and an N-methylolacrylamide side chain may be also used.

In the case of using resins as the aforementioned constituent materials of the filler-containing layer 22 and filler-free layer 21, these reins are admixed by adjusting the balance of the compositions, considering reliability and productivity including the gloss level of the print-receiving layer 20, ink absorptivity, adhesion to the recording/reading functional layer 10, the weather resistance, water resistance, and warping of the resulting optical recording media.

In particular, the hydrophilic resin is contained in the print-receiving layer 20 in an amount of generally 1 wt% or more, preferably 2 wt% or more, and more preferably 5 wt% or more, whereas the hydrophilic resin is contained in the print-receiving layer 20 in an amount of generally 30 wt% or less, preferably 25 wt% or less, more preferably 20 wt% or less, and still more preferably 15 wt% or less.

### In the case of using hydrophilic resin in filler-containing layer 22:

The organic filler or inorganic filler contained in the filler-containing layer 22 may allow the filler-containing layer 22 to easily secure the ink absorptivity. For this purpose, the amount of the hydrophilic resin contained in the filler-containing layer 22 may be reduced. Specifically, the hydrophilic resin is contained in the filler-containing layer 22 in an amount of generally 20 wt% or less, preferably 15 wt% or less, more preferably 10 wt% or less, and still more preferably 5 wt% or less, whereas the hydrophilic resin is contained in the filler-containing layer 22 in an amount of generally 1 wt% or more and preferably 2 wt% or more.

As the hydrophilic resin used for the filler-containing layer 22, the aforementioned various materials may be used. Among these materials, a polyvinylpyrrolidone-vinylacetate copolymer is preferably used. Forming the filler-containing layer 22 by using the polyvinylpyrrolidone-vinyl acetate copolymer may enhance the ink absorptivity and may increase the compatibility with the monomer components of the UV curable resin.

The weight average molecular weight (Mw) of the poly(vinylpyrrolidone-vinyl acetate) copolymer is generally 10,000 or more, preferably 30,000 or more, and more preferably 50,000 or more. Within the above ranges, the print-receiving layer 20 may attain an adequate uniformity easily. In addition, adequate ink absorptivity, water resistance, and tackiness are also easily attained.

On the other hand, the weight average molecular weight (Mw) of the poly(vinylpyrrolidone-vinyl acetate) copolymer is generally 500,000 or less, preferably 300,000 or less, and more preferably 200,000 or less. Within the above ranges, adequate compatibility with the hydrophilic acrylate monomer or urethane acrylate oligomer is easily attained. In addition, the coating solution may attain an appropriate viscosity easily.

The weight average molecular weight of the poly(vinylpyrrolidone-vinyl acetate) copolymer may be evaluated by gel permeation chromatography (GPC) in terms of the equivalent molecular weight of standard polystyrene.

The polymerization degree of the poly(vinylpyrrolidone-vinyl acetate) copolymer is generally 300 or more, preferably 350 or more, and more preferably 400 or more. Within the above ranges, adequate ink absorptivity, water resistance, and tackiness are attained easily.

On the other hand, the polymerization degree of the poly(vinylpyrrolidone-vinyl acetate) copolymer is generally 700 or less, preferably 650 or less, and more preferably 600 or less. Within the above ranges, adequate compatibility with the hydrophilic acrylate monomer or urethane acrylate oligomer is easily attained. In addition, the coating solution may attain an appropriate viscosity easily.

In the poly(vinylpyrrolidone-vinyl acetate) copolymer, the copolymerization ratio of vinylacetate monomer with respect to vinylpyrrolidone monomer, (vinylpyrrolidone monomer): (vinylacetate monomer) (in mol/mol), is generally 100: 10 to 100:75, preferably 100: 15 to 100:70, and more preferably 100 : 20 to 100 : 67.

Within the above ranges of the vinylacetate copolymerization ratio in the poly(vinylpyrrolidone-vinyl acetate) copolymer, the polyvinylpyrrolidone-vinylacetate may attain adequate coagulation force easily, whereby the filler-containing layer 22 also tends to attain adequate coagulation force. In addition, adequate compatibility to the water-soluble acrylate monomer and adequate affinity to the urethane acrylate oligomer are also attained easily. Further, adequate printing workability is also attained easily. Still further, the poly(vinylpyrrolidone-vinyl acetate) copolymer may attain adequate water solubility easily. As a result, the coating solution may be handled easily. In addition, adequate ink absorptivity, water resistance, and tackiness are secured easily.

The poly(vinylpyrrolidone-vinyl acetate) copolymer is used preferably in a powder form. By using the poly(vinylpyrrolidone-vinyl acetate) copolymer in a powder form, for example, when a UV curable ink is used, the water content thereof may be easily adjusted. In addition, not only there may be attained still more adequate affinity between a specific water-soluble polymer and a specific water-soluble monomer, but also there may be reduced the ink bleeding substantially when the properties of a water-based ink vary or different water-based ink is used.

The average diameter of the poly(vinylpyrrolidone-vinyl acetate) copolymer in a power form is generally 0.01 mm or more, preferably 0.05 mm or more, and more preferably 0.1 mm or more, whereas the average diameter of the poly(vinylpyrrolidone-vinyl acetate) copolymer in a power form is generally 5 mm or less, preferably 4 mm or less, and more preferably 3 mm or less. Within the above ranges, the hygroscopicity may be easily controlled, so that the handling becomes easy and an adequate control of the water content is easily attained. Further, within the above ranges, the dissolution time to the hydrophilic monomer may be easily shortened.

The water content of the poly(vinylpyrrolidone-vinyl acetate) copolymer in a powder form is, with respect to the total amount of the poly(vinylpyrrolidone-vinyl acetate) copolymer, generally 0.01 wt% or more, preferably 0.05 wt% or more, and more preferably 0.1 wt% or more, whereas the water content of the poly(vinylpyrrolidone-vinyl acetate) copolymer in a powder form is, with respect to the total amount of the poly(vinylpyrrolidone-vinyl acetate) copolymer, generally 10 wt% or less, preferably 7 wt% or less, and more preferably 5 wt% or less. Within the above ranges, the stability in production is likely to be increased. In addition, the hygroscopicity is also controlled adequately. Further, the affinity to the urethane acrylate oligomer is easily enhanced, so that the water content in the coating solution is easily controlled.

The poly(vinylpyrrolidone-vinyl acetate) copolymer is contained in the filler-containing layer 22 in an amount of generally 1 wt% or more and preferably 2 wt% or more, whereas the poly(vinylpyrrolidone-vinyl acetate) copolymer is contained in the filler-containing layer 22 in an amount of generally 10 wt% or less, preferably 7 wt% or less, and more preferably 5 wt% or less. Within the above ranges, adequate water resistance, tackiness, and printing workability may be easily attained while sufficient ink absorptivity is provided.

### In the case of using the hydrophilic resin in filler-free layer 21:

As the hydrophilic resin used in the filler-free layer 21, the aforementioned various materials may be used. Among these materials, an alkyl-modified polyvinylpyrrolidone is preferably used. Forming the filler-free layer 21 by using the alkyl-modified polyvinylpyrrolidone may provide adequate surface properties of the print-receiving layer 20 (for example, surface stickiness to fingers is prevented; surface flatness is enhanced; and others). As the alkyl-modified polyvinylpyrrolidone, there may be mentioned, for example, the one given by substituting a hydrogen atom of polyvinylpyrrolidone by an alkyl group.

Specifically, a C1~C6 alkyl group, preferably a C4 alkyl group (for example, 1-butene) or a C6 alkyl group (for example, 1-hexadene) is added. These alkyl groups are added in an amount of generally 5% or more and preferably 10% or more, whereas these alkyl groups are added in an amount of generally 80% or less, preferably 50% or less, and more preferably 20% or less. The above percent of addition may be controlled as appropriate in accordance with the performance required for the alkyl-modified polyvinylpyrrolidone.

The filler-free layer 21 contains no organic filler or inorganic filler, exhibiting lower ink absorptivity. Therefore, it is preferable that much hydrophilic resin is contained in the filler-free layer 21. The hydrophilic resin is contained in the filler-free layer 21 in an amount of generally 10 wt% or more and preferably 15 wt% or more, whereas the hydrophilic resin is contained in the filler-free layer 21 in an amount of generally 50 wt% or less, preferably 40 wt% or less, more preferably 30 wt% or less, and still more preferably 25 wt% or less.

### (3) Surfactant

In order to increase the gloss level of the print-receiving layer 20, the filler-containing layer 22 surface and the filler-free layer 21 surface are preferably smoothed (that is, the surface roughness is reduced). As a method of smoothing each surface of the filler-containing layer 22 and filler-free layer 21, preferably there may be mentioned a process in which a surfactant is admixed in the coating solution that contains resins constituting these layers; and the coating solution is coated and dried (or cured) so as to form the filler-containing layer 22 and filler-free layer 21.

The surfactant is expected to provide an additional effect of defoaming after the coating solution is coated, in the case where the filler-containing layer 22 and filler-free layer 21 are formed by coating and drying or curing the coating solution.
As the surfactant, there is not any particular limitation, but there may be mentioned, for example, polysiloxanes, acryl copolymers, and the like.

The surfactant is contained in the print-receiving, layer 20 in an amount of generally 0.5 wt% or more, preferably 1 wt% or more, and more preferably 2 wt% or more, whereas the surfactant is contained in the print-receiving layer 20 in an amount of generally 10 wt% or less, preferably 7 wt% or less, and more preferably 6 wt% or less. Within the above ranges, the smoothness of the filler-containing layer 22 and filler-free layer 21 is easily enhanced. In addition, the defoaming effect after coating is easily attained.

### (4) Fixing agent

A fixing agent is preferably contained in the print-receiving layer 20 from the viewpoint of increasing the adhesion to ink. As the fixing agent, specifically, there may be mentioned a cationic fixing agent. By using the cationic fixing agent as mentioned above, the adhesion to ink is easily enhanced when the ink is anionic. In particular, the ink for inkjet printing is anionic in many cases, so that the fixing agent is preferably used in the print-receiving layer 20 when inkjet printing is applied.

The fixing agent is contained in the print-receiving layer 20 in an amount of generally 1 wt% or more and 5 wt% or less. The fixing agent is contained in the print-receiving layer 20 in an amount of preferably 3 wt% or less. Within the above ranges, the fixing property of ink is easily secured while the total properties of the print-receiving layer 20 are balanced.

### (5) Organic filler and inorganic filler

The organic filler and inorganic filler admixed in the filler-containing layer 22 will be explained below.
As the organic filler admixed in the filler-containing layer 22, there may be mentioned a water-absorbing and/or oil absorbing filler. Specifically, there may be mentioned, for example, fine particles of acrylic resin, polyacrylate, polymethacrylate, styrene resin, polyester, polycarbonate, modified melamine resin, polyvinylalcohol, polyacrylamide, polyvinylpyrrolidone, rubber, and the like; cross-linked fine particles of the foregoing polymers; powders of lignin, protein, cellulose, and silk; and others.

Particularly, powders of lignin, protein, cellulose, and silk are preferable because these powders have high water absorption and oil absorption. The particle diameter of the organic filler is generally 0.1 µm or more and 20 µm or less. Within the above range of the organic filler particle diameter, the fixing property to printing ink may be effectively exhibited.

As the inorganic filler admixed in the filler-containing layer 22, there may be mentioned a water-absorbing and/or oil-absorbing filler. Specifically, there may be mentioned, for example, silicon oxide (silica), talc, titanium oxide, clay, calcium carbonate, calcium silicate, barium sulfate, mica, diatomite silica, aluminum hydroxide, alumina, zirconium oxide, zirconium hydroxide, and the like.

Among these, silicon oxide (silica), talc, titanium oxide, calcium carbonate, aluminum hydroxide, and alumina are preferable. Particularly preferable are silicon oxide (silica), talc, titanium oxide, and alumina. The inorganic filler may be colored by other pigments. The particle diameter of the inorganic filler is generally 0.01 µm or more and 20 µm or less. Within the above range of the inorganic filler particle diameter, the fixing property to printing ink may be effectively exhibited.

The content of the organic filler or inorganic filler admixed in the filler-containing layer 22 depends on the particle diameter (particle size distribution) of the organic filler or inorganic filler. In order to secure the ink absorptivity, the organic filler or inorganic filler is contained in the filler-containing layer 22 in an amount of generally 1 wt% or more, preferably 5 wt% or more, and more preferably 10 wt% or more, whereas the organic filler or inorganic filler is contained in the filler-containing layer 22 in an amount of generally 50 wt% or less, preferably 40 wt% or less, and more preferably 35 wt% or less. Within the above ranges of the content of the organic filler or inorganic filler, the surface smoothness of the filler-free layer, filler-containing layer, and print-receiving layer is easily secured.

### (6) Method of producing print-receiving layer 20

The method of producing the print-receiving layer 20 is not particularly limited.
The filler-containing layer 22 is generally produced as follows: a coating solution is prepared by mixing a hydrophilic resin, a UV curable resin, a photo-polymerization initiator, the other additives, and an organic filler and/or inorganic filler; the coating solution is coated on the recording/reading functional layer 10 by spin-coating, bar-coating, blade-coating, air knife-coating, roll-coating, spray-coating, screen printing, or the like; then, the resulting coating film is irradiated with a UV for curing.

The filler-free layer 21 is generally produced as follows: a coating solution is prepared by mixing a hydrophilic resin, a UV curable resin, a photo-polymerization initiator, and the other additives; the coating solution is coated on the filler-containing layer by spin-coating, bar-coating, blade-coating, air knife-coating, roll-coating, spray-coating, screen printing, or the like; and then, the resulting coating film is irradiated with a UV for curing.

In the above examples of production methods, after the filler-containing layer 22 and filler-free layer 21 are coated, each coating is cured by UV irradiation separately. However, after the filler-containing layer 22 and filler-free layer 21 are coated, both filler-containing layer 22 and filler-free layer 21 may be cured by UV irradiation at the same time.

Among the aforementioned coating processes, screen printing is preferable because the thickness may be easily controlled and a high productivity may be attained. As a UV source, there may be used a mercury lamp, a high pressure mercury lamp, an ultra high pressure mercury lamp, a metal halide lamp, and the like. The amount of energy irradiated is generally 150 mJ/cm² or more and preferably 250 mJ/cm² or more, whereas the amount of energy irradiated is generally 2,000 mJ/cm² or less and preferably 1,000 mJ/cm² or less.

### (7) Securing gloss level of print-receiving layer 20

The gloss level of the print-receiving layer 20 will be explained below. In the print-receiving layer 20 of the optical recording medium 100 in accordance with the present exemplary embodiment, the face to which a water-based ink is adsorbed at first (the surface 21 F of the filler-free layer in FIG. 2) has a gloss level of preferably 30 or more, more preferably 40 or more, and still more preferably 50 or more. Here, the gloss level is evaluated in terms of "20-degree mirror face gloss level" measured with a given gloss level meter at a 20-degree incident angle in accordance with JIS Z8741 (ISO 2813, ASTM D 523, and DIN 67530).

When the face of the print-receiving layer 20 to which a water-based ink is adsorbed at first has a gloss level of 30 or more, an adequate printing performance and an adequate adhesion to the recording/reading functional layer 10 may be secured while the print-receiving layer 20 maintains a high gloss level.
The gloss level depends on the performance required for a product, but generally is in the range of 100 or less.
The gloss level of the print-receiving layer 20 may be easily attained by applying the following controls to each of the filler-containing layer 22 and filler-free layer 2 1.

### Filler-containing layer 22:

In order to secure the gloss level of the print-receiving layer 20 surface, the surface roughness of the filler-containing layer 22 disposed on the side of the recording/reading layer 10 is required to be controlled. Specifically, the surface roughness Ra (arithmetic average roughness) of the filler-containing layer surface 22F is preferably lowered. Here, the definition of the arithmetic average roughness is, for example, in accordance with the description of JIS B0601 (1994) or JIS B0031 (1994).

More specifically, the surface roughness Ra of the filler-containing layer surface 22F is generally 5 µm or less, preferably 3 µm or less, and more preferably 1 µm or less. The smaller the surface roughness of the filler-containing layer surface 22F, the better. However, practically the lower limit of the surface roughness Ra of the filler-containing layer surface 22F is generally 0.1 µm. Within the above ranges of the surface roughness Ra of the filler-containing layer surface 22F, the gloss level of the print-receiving layer 20 is easily secured.

As a specific method of reducing the surface roughness Ra of the filler-containing layer surface 22F, there may be mentioned a method for controlling the materials of the filler-containing layer 22 or a method for controlling the conditions of production processes. The specific examples of the method for controlling the materials of the filler-containing layer 22 are as follows:
(a) In the case of forming the filler-containing layer 22 using the UV curable resin, the oligomer content is increased. The oligomer component may work to control the viscosity of the resin, whereby the organic filler or inorganic filler is considered to be prevented from coming out to the surface of the filler-containing layer;
(b) The particle diameter of the organic filler or inorganic filler contained in the filler-containing layer 22 is reduced. As the particle diameter of the organic filler or inorganic filler becomes smaller, the surface roughness is considered to be reduced;
(c) The content of the organic filler or inorganic filler contained in the filler-containing layer 22 is reduced. When the content of the organic filler or inorganic filler is reduced, the number of the particles of the filler coming out to the surface becomes small, so that the surface roughness is considered to become small; and
(d) The particle diameter of the organic filler or inorganic filler contained in the filler-containing layer 22 is reduced and the content thereof is also reduced. This is considered to be attributed to the same reasons mentioned above in (b) and (c).

The specific examples of the method for controlling the conditions of production processes are as follows:
(a) In the case of producing the filler-containing layer 22 by screen-printing, the mesh size is reduced. By reducing the mesh size, ink may be finely uniformly coated through the screen meshes, whereby leveling is considered to proceed quickly;
(b) In the case of producing the filler-containing layer 22 by screen-printing, a squeegee is moved fast. The shearing speed of the coating solution (ink) is increased on coating, and practically the viscosity is lowered, whereby leveling is considered to proceed quickly; and
(c) In the case of producing the filler-containing layer 22 by drying and curing after the coating solution is coated, the time from coating to drying is extended. By extending the time, the coating surface is considered to be easily smoothed.

### Filler-free layer 21:

From the viewpoint of securing the gloss level of the print-receiving layer 20 surface, it is also important to control the surface roughness Ra of the filler-free layer 21 disposed on the side of the face to which the ink is adsorbed at first. Namely, in the present exemplary embodiment, without mixing organic filler or inorganic filler, the surface roughness Ra of the filler-free layer 21 may be reduced primarily. Specifically, the surface roughness Ra of the filler-free layer surface 21F is generally 5 µm or less, preferably 3 µm or less, more preferably 1 µm or less, and particularly preferably 0.5 µm or less. The smaller the surface roughness of the filler-free layer surface 21F, the better. However, practically the lower limit of the surface roughness Ra of the filler-free layer surface 21F is generally 0.01 µm. Within the above ranges of the filler-free layer surface 21F, the gloss level of the print-receiving layer 20 is easily secured.

As a specific method of reducing the surface roughness Ra of the filler-free layer surface 21F, there may be mentioned, for example, a method for controlling the materials of the filler-free layer 21 or a method for controlling the conditions of production processes. The specific examples of the method for controlling the materials of the filler-free layer 21 are as follows:
(a) In the case of producing the filler-free layer 21 by drying and curing after the coating solution is coated, the viscosity of the coating solution is lowered. By lowering the viscosity of the coating solution, the coating conditions are easily controlled. As a result, the surface property of the filler-free layer 21 is easily controlled.
(b) In the case of producing the filler-free layer 21 by drying and curing after the coating solution is coated, the content of the surfactant contained in the coating solution is increased. By increasing the content of the surfactant, defoaming after coating may be performed more adequately or leveling of the surface of the coating may be improved.

From the viewpoint of production conditions, some specific points to be considered are listed below.
(a) In the case of producing the filler-free layer 21 by screen-printing, the mesh size is reduced. By reducing the mesh size, ink may be finely uniformly coated through the screen mesh, whereby leveling is considered to proceed quickly;
(b) In the case of producing the filler-free layer 21 by screen-printing, a squeegee is moved fast. The shearing speed of the coating solution (ink) is increased on coating, and practically the viscosity is lowered, whereby leveling is considered to proceed quickly; and
(c) In the case of producing the filler-free layer 21 by drying and curing after the coating solution is coated, the time from coating to drying is extended. By extending the time, the coating surface is considered to be easily smoothed.

### (8) Thickness of the print-receiving layer

The thickness of the print-receiving layer 20 is not particularly limited, but generally 5 µm or more, preferably 15 µm or more, and more preferably 20 µm or more, whereas the thickness of the print-receiving layer 20 is generally 100 µm or less, preferably 70 µm or less, and more preferably 50 µm or less. Within the above ranges of the thickness of the print-receiving layer 20, the ink acceptability is easily secured.

The thickness of the filler-containing layer 22 is generally 5 µm or more, preferably 10 µm or more, and more preferably 15 µm or more, whereas the thickness of the filler-containing layer 22 is generally 70 µm or less, preferably 50 µm or less, and more preferably 40 µm or less. Within the above ranges of the thickness of the filler-containing layer 22, the ink acceptability is easily enhanced.

Further, the thickness of the filler-free layer 21 is generally 1 µm or more, preferably 3 µm ore more, and more preferably 5 µm or more, whereas the thickness of the filler-free layer 21 is generally 30 µm or less, preferably 20 µm or less, and more preferably 10 µm or less. Within the above ranges of the thickness of the filler-free layer 21, the ink acceptability is easily enhanced.

### (9) Preferred exemplary embodiment of filler-containing layer 22

A preferred exemplary embodiment of the filler-containing layer 22 will be explained below.

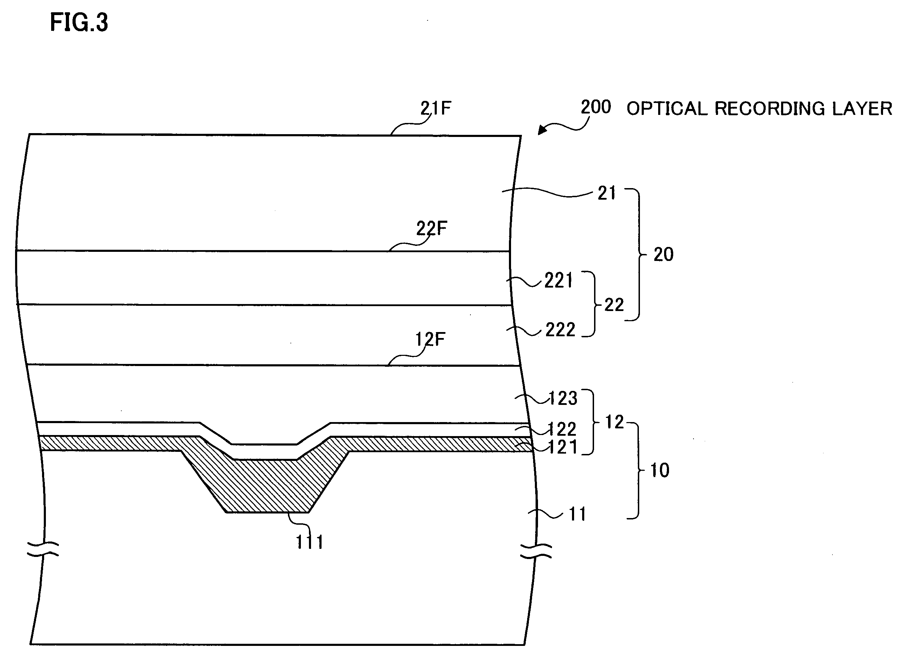

FIGURE 3 is a drawing for explaining a second exemplary embodiment of the print-receiving layer 20 disposed on the optical recording medium 200 in accordance with the present exemplary embodiment. The components duplicated in FIG. 2 are referenced by the same symbols used in FIG. 2, and their explanations are omitted.
As shown in FIG. 3, the print-receiving layer 20 disposed on the surface of the recording/reading functional layer 10 is in contact with the protective layer surface 12F and has the filler-containing layer 22 that contains the organic filler and/or inorganic filler in a predetermined amount and the filler-free layer 21 that contains no organic filler and/or inorganic filler. Further, the filler-containing layer 22 is composed of a first filler-containing layer 222 that is in contact with the protection layer surface 12F of the recording/reading functional layer 10 and a second filler-containing layer 221 disposed on the side of the filler-free layer 21.

### Organic filler or inorganic filler:

In the present exemplary embodiment, it is preferable that, in the filler-containing layer 22, as compared with the amount of the organic filler or inorganic filler contained in the first filler-containing layer 222 disposed on the side of the recording/reading functional layer 10, the amount of the organic filler or inorganic filler contained in the second filler-containing layer 221 disposed on the side of the filler-free layer 21 is selected to be smaller. By making the amount of the organic filler or inorganic filler contained in the second filler-containing layer 221 smaller than the amount of the organic filler or inorganic filler contained in the first filler-containing layer 222, the adhesion between the print-receiving layer 20 and the recording/reading functional layer 10 may be easily secured. The gloss level of the print-receiving layer 20 may be also easily secured. In addition, by increasing the amount of the organic filler or inorganic filler contained in the first filler-containing layer 222 on the side of the recording/reading functional layer 10, the ink absorptivity may be easily enhanced. On the other hand, by decreasing the amount of the organic filler or inorganic filler contained in the second filler-containing layer 221 on the side of the filler-free layer 21, the gloss level of the print-receiving layer 20 is easily increased.

The filler-containing layer may have a structure of three or more layers, or may have such structure that the filler content changes continuously in the thickness direction. Namely, when the whole filler-containing layer is regarded as one layer and is divided into two regions having the same thickness, that is, a filler-free layer side and a recording/reading functional layer side, the effect of the present invention may be easily attained, if the filler content in the region of the recording/reading functional layer side that corresponds to the first filler-containing layer is made larger than the filler content in the region of the filler-free layer side that corresponds to the second filler-containing layer.

The amount of the organic filler or inorganic filler contained in the first filler-containing layer 222 of the filler-containing layer 22 is selected as appropriate in accordance with the particle diameter (particle size distribution) of the organic filler or inorganic filler. The organic filler or inorganic filler is contained in the first filler-containing layer 222 in an amount of generally 10 wt% or more, preferably 20 wt% or more, and more preferably 30 wt% or more, whereas the organic filler or inorganic filler is contained in the first filler-containing layer 222 in an amount of generally 70 wt% or less, preferably 50 wt% or less, and more preferably 40 wt% or less.

Further, the amount of the organic filler or inorganic filler contained in the second filler-containing layer 221 of the filler-containing layer 22 is selected as appropriate in accordance with the particle diameter (particle size distribution) of the organic filler or inorganic filler. The organic filler or inorganic filler is contained in the second filler-containing layer 221 in an amount of generally 1 wt% or more and preferably 3 wt% or more, whereas the organic filler or inorganic filler is contained in the second filler-containing layer 221 in an amount of generally 40 wt% or less and preferably 30 wt% or less.

From the viewpoint of securing the surface smoothness of the print-receiving layer 20, the particle diameter of the organic filler or inorganic filler contained in the second filler-containing layer 221 is preferably reduced. Specifically, the particle diameter is preferably 10 µm or less and more preferably 5 µm or less. In the case of forming the print-receiving layer 20 by coating and drying (curing) a given coating solution, from the viewpoint of suppressing increase in the viscosity of the coating solution, the particle diameter of the organic filler or inorganic filler contained in the second filler-containing layer 221 is generally 0.05 µm or more and preferably 0.1 µm or more.

### UV curable resin:

When the filler-containing layer 22 is made to contain a UV curable resin and to have a two-layered structure consisting of the first filler-containing layer 222 and the second filler-containing layer 221, the filler-containing layer 22 is provided more preferably in the following manner by using the aforementioned materials.
In the second filler-containing layer 221, from the viewpoint of improving the gloss level and productivity, the content of the polymerizable oligomers is preferably increased. Among the polymerizable oligomers, the content of a hydrophilic oligomer such as a hydrophilic urethane acrylate is preferably increased. Specifically, polymerizable oligomers are contained in the coating solution that forms the second filler-containing layer 221 in an amount of preferably 1 wt% or more and more preferably 4 wt% or more, whereas the polymerizable oligomers are contained in the coating solution that forms the second filler-containing layer 221 in an amount of generally 40 wt% or less.

Further, the second filler-containing layer 221 contains, from the viewpoint of enhancing the ink acceptability, preferably hydrophilic monomers in a predetermined amount. The hydrophilic monomers are contained in the coating solution that forms the second filler-containing layer 221 in an amount of preferably 30 wt% or more, more preferably 40 wt% or more, and still more preferably 45 wt% or more, whereas the hydrophilic monomers are contained in the coating solution that forms the second filler-containing layer 221 in an amount of preferably 70 wt% or less and more preferably 60 wt% or less.

In the first filler-containing layer 222, from the viewpoint of assuring the adhesion to the recording/reading functional layer 10, a polymerizable oligomer having a lowered hydrophilicity is preferably used. As the polymerizable oligomer having a lowered hydrophilicity, there may be mentioned, for example, an oligomer component such as a hydrophilic urethane acrylate having a small number of bonded hydrophilic substituents.
Further, in the first filler-containing layer 222, from the viewpoint of securing the adhesion to the recording/reading functional layer 10, a hydrophobic urethane acrylate oligomer is also preferably used. As the hydrophobic urethane acrylate oligomer, there may be mentioned, for example, an oligomer component such as a urethane acrylate having no hydrophilic substituent.

The polymerizable oligomer having a lowered hydrophilicity and/or the hydrophobic acrylate oligomer is contained in the coating solution that forms the fist filler-containing layer 222 in an amount of preferably 5 wt% or more and more preferably 10 wt% or more, whereas the polymerizable oligomer having a lowered hydrophilicity and/or the hydrophobic acrylate oligomer is contained in the coating solution that forms the first filler-containing layer 222 in an amount of preferably 30 wt% or less and more preferably 25 wt% or less.

In addition, in order to improve the ink acceptability of the first filler-containing layer 222, a hydrophilic urethane acrylate oligomer is also preferably used in a predetermined amount. The hydrophilic urethane acrylate oligomer is contained in the coating solution that forms the first filler-containing layer 222 in an amount of preferably 0.1 wt% or more and 10 wt% or less.

Further, from the viewpoint of controlling precisely the ink acceptability of the first filler-containing layer 222, hydrophilic monomers are also preferably used in a predetermined amount. The hydrophilic monomers are contained in the coating solution that forms the first filler-containing layer 222 in an amount of preferably 10 wt% or more, more preferably 20 wt% or more, and still more preferably 25 wt% or more, whereas the hydrophilic monomers are contained in the coating solution that forms the first filler-containing layer 222 in an amount of preferably 50 wt% or less and more preferably 40 wt% or less.

### Hydrophilic resin:

When the filler-containing layer 22 is made to contain a hydrophilic resin and to have a two-layered structure consisting of the first filler-containing layer 222 and the second filler-containing layer 221, the filler-containing layer 22 is provided more preferably in the following manner by using the aforementioned materials.
Firstly, from the viewpoint of securing the ink acceptability, as the hydrophilic resin contained in the first filler-containing layer 222 and the second filler-containing layer 221, preferably there may be used a poly(vinylpyrrolidone-vinyl acetate) copolymer.

The hydrophilic resin is contained in the first filler-containing layer 222 in an amount of preferably 1 wt% or more, whereas the hydrophilic resin is contained in the first filler-containing layer 222 in an amount of preferably 10 wt% or less and more preferably 5 wt% or less.
The hydrophilic resin is contained in the second filler-containing layer 221 in an amount of preferably 1 wt% or more, whereas the hydrophilic resin is contained in the second filler-containing layer 221 in an amount of preferably 10 wt% or less and more preferably 5 wt% or less.

### Thickness of layers:

The thickness of the first filler-containing layer 222 is not particularly limited, but generally 1 µm or more, preferably 3 µm or more, and more preferably 5 µm or more, whereas generally 30 µm or less, preferably 20 µm or less, and more preferably 15 µm or less. Within the above ranges of the thickness of the first filler-containing layer 222, the ink acceptability is easily enhanced.
The thickness of the second filler-containing layer 221 is not particularly limited, but generally 1 µm or more, preferably 3 µm or more, and more preferably 5 µm or more, whereas generally 30 µm or less, preferably 20 µm or less, and more preferably 15 µm or less. Within the above ranges of the thickness of the second filler-containing layer 221, the ink acceptability is easily enhanced.

### (10) Layers capable of being disposed besides the print-receiving layer

In the optical recording media 100 and 200 in accordance with the present exemplary embodiment, when the print-receiving layer 20 is required to be colored, an underlying layer may be disposed between the recording/reading functional layer 10 and the print-receiving layer 20. For the underlying layer, there may be used, for example, a material that contains a low shrinking UV curable acrylic resin containing titanium oxide in an amount of 10 wt% or more and 30 wt% or less. The underlying layer has no ink absorptivity, but plays an important role in some cases from the viewpoint of design of the optical recording media 100 and 200. As a specific example of the material for the underlying layer, there may be mentioned, for example, "Seika-Beam SCR-VID F29" manufactured by Dainichiseika Color & Chemicals Mfg. Co., Ltd. (similar product to "Raycure Ink VID_F29 TH", manufacture by Jujo Chemical Co., Ltd.), and the like.

### (11) Ink composition

As a UV curable ink composition that forms the filler-free layer 21, the following composition may be preferably used. That is, there is mentioned a UV curable ink composition that contains an alkyl-modified polyvinylpyrrolidone, a hydrophilic monomer, and a photo-polymerization initiator. Further, a fixing agent is preferably contained in the UV curable ink composition, because the fixing agent easily enhances the fixing property of the ink. In addition, a polymerizable oligomer is also preferably contained. The UV curable ink composition preferably further contains a surfactant.

Each material of the alkyl-modified polyvinylpyrrolidone, the hydrophilic monomer, the photo-polymerization initiator, the fixing agent, the polymerizable oligomer component, and the surfactant is already explained as above, so that the explanation is omitted. The amount of each material contained may be the same as the amount mentioned above in the filler-free layer 21 or the coating solution that forms the filler-free layer 21. The reason why the same amount may be used is that the UV curable ink composition contains no solvent. Because of containing no solvent, an advantage of not requiring extra time and energy for solvent removal may be easily exhibited.

Of course, a solvent may be contained in the aforementioned UV curable ink composition. The viscosity of the ink composition may be easily controlled by using the solvent in combination. In the case of using the solvent in combination, the amount of each material contained in the UV curable ink composition may be adjusted as appropriate in such a manner that the amount of each material contained in the filler-free layer 21 or the coating solution that forms the filler-free layer 21 may be selected within the same ranges as mentioned above.
In addition, the UV curable ink composition is preferably used to form the filler-free layer 21. However, the UV curable ink composition is not limited only for use in forming the filler-free layer 21.

### 2. Recording/reading Functional Layer

Hereinafter, a specific example of the recording/reading functional layer will be mentioned.
In FIGs. 1 to 3, the recording/reading functional layer 10 is explained on the basis of the substrate surface incident type optical recording media 100 and 200 (CD-R), but the layered structure of recording/reading functional layer 10 is not limited thereto. The recording/reading functional layer 10 may have any layered structure in accordance with each objective of a read only medium (ROM medium), a write once read many medium (Write Once medium) that enables writing only one time, and a rewritable medium (ReWritable medium). The recording/reading functional layer 10 may be classified into a substrate surface incident type as exemplified in FIGs. 1 to 3 and a film surface incident type.

### Example of read only medium:

In the case of the read only medium, the recording/reading functional layer generally has a substrate having a pit with a predetermined size formed thereon, and a reflection layer and a protection layer formed on the substrate. As the material of the reflection layer, generally a metal such as Al, Ag, and Au or an alloy thereof is used. As the material of the protection layer, generally a UV curable resin and the like are used. Further, as the protection layer, a plate material made of resin such as a polycarbonate or a metal is used in some cases. In the case of the read only medium, both substrate surface incident type and film surface incident type have the same layered structure.

In the case of the read only medium, the recording/reading functional layer is generally produced as follows: the reflection layer is formed on the substrate by sputtering; and then a protection layer is formed by curing a UV curable resin coated on the reflection layer. Further, in the case of using a plate material as the protection layer, the plate material is bonded on the reflection layer with an adhesive.

### Example 1 of write once read many medium:

In the write once read many medium of film surface incident type, generally the recording/reading functional layer is obtained by forming a reflection layer, a recording layer, and a protection layer on a substrate in this order. A buffer layer of an inorganic material (for example, ZnS/SiO₂) may be interposed between the recording layer and protection layer.
On the other hand, in the write once read many medium of substrate surface incident type, the recording/reading functional layer is obtained by forming a recording layer, a reflection layer, and a protection layer on a substrate in this order.

As the material of the reflection layer, generally a metal such as Al, Ag, and Au or an alloy thereof is used. As the material of the protection layer, generally a UV curable resin is used. Further, as the protection layer, a plate material of a resin (for example, polycarbonate) or a metal is used in some cases. The reflection layer and the protection layer may be formed in the same method as in the read only medium. When a plate material of a resin (for example, polycarbonate) or a metal is used for the protection layer, the plate material may be bonded to the recording layer, buffer layer, or reflection layer with an adhesive.

As the material of the recording layer in the aforementioned write once read many medium, generally an organic dye is used. The organic dye may include a macrocyclic aza-annulene dye (such as phthalocyanine, naphthalocyanine, and porphyrin dyes), a polymethine dye (such as cyanine, merocyanine, and squarylium dyes), an anthraquinone dye, an azulenium dye, a metal-containing azo dye, a metal-containing indoaniline dye, and the like. In particular, the metal-containing azo dye is preferable because of excellent durability and light resistance.

When the recording layer is prepared from an organic dye, generally the recording layer is prepared using a solution dissolving the organic dye in an appropriate solvent by a coating process such as spin-coating, spray-coating, dip-coating, and roll-coating. As the solvent, there may be used preferably a ketone alcohol such as diacetone alcohol, 3-hydroxy-3-methyl-2-butanone and the like; a cellosolve such as methylcellosolve, ethylcellosolve and the like; a perfluoroalkyl alcohol such as tetrafluoropropanol and octafluoropentanol; a hydroxyethyl such as methyl lactate, methyl isobutyrate and the like; and others.

The thickness of the recording layer is not particularly limited because the appropriate thickness depends on the recording method and the like, but the thickness is generally 5 nm or more, preferably 10 nm or more, and particularly preferably 20 nm or more in order to obtain a sufficient degree of modulation. However, the thickness is generally 3 µm or less, preferably 1 µm or less, and more preferably 200 nm or less because the recording layer is required to allow light transmission.

### Example 2 of write once read many medium:

In another specific example of the write once read many medium of film surface incident type, the recording/reading functional layer is obtained generally by disposing a reflection layer, a dielectric layer, a recording layer, a dielectric layer, and a protection layer on a substrate in this order. On the other hand, in another specific example of the write once read many medium of substrate surface incident type, the recording/reading functional layer is obtained by disposing a dielectric layer, a recording layer, a dielectric layer, a reflection layer, and a protection layer on a substrate in this order.

As the material of the reflection layer, generally a metal such as Al, Ag, and Au or an alloy thereof is used. As the material of the protection layer, generally a UV curable resin is used. In addition, as the material of the protection layer, a plate material of a resin (for example, polycarbonate) or a metal is used in some cases. The reflection layer and the protection layer may be formed by the same method as used in the read only medium.
As the material of the dielectric layer, generally an inorganic material (typically, ZnS/ SiO₂) is used. The dielectric layer is generally prepared by sputtering.

For the recording layer, generally an inorganic material (for example, a chalcogen alloy such as Ge-Te and Ge-Sb-Te) is used. The recording layer is prepared generally by sputtering. The thickness of the recording layer is generally around 1 nm to 50 nm.

### Example 1 of rewritable medium:

In the rewritable medium of film surface incident type, the recording/reading functional layer is obtained by generally disposing a reflection layer, a dielectric layer, a recording layer, a dielectric layer, and a protection layer on a substrate in this order. On the other hand, in the rewritable medium of substrate surface incident type, the recording/reading functional layer is obtained by generally disposing a dielectric layer, a recording layer, a dielectric layer, a reflection layer, and a protection layer on a substrate in this order.

The reflection layer, dielectric layers, and protection layer are obtained similarly to the example 2 of the aforementioned write once read many medium, except that the recording layer is required to be formed from a material that allows reversible recording and erasing. Such material may include, for example, a composite system such as SbTe, GeTe, GeSbTe, InSbTe, AgSbTe, AgInSbTe, GeSb, GeSbSn, InGeSbTe, and InGeSbSnTe. Among these, a composite system containing Sb as a main component is preferably used for the recording layer.

### Example 2 of rewritable medium:

As another specific example of the rewritable medium, there may be mentioned a magnetic optical recording medium (MO disk).

### Common element:

As the material of the substrate that composes the recording/reading functional layer, generally there may be mentioned plastic, metal, glass and the like that have adequate processability and stiffness. When the optical recording medium is a substrate surface incident type, a light transmitting material that is transparent to the incident light is used as the material of the substrate. On the other hand, in the case of the optical recording medium of film surface incident type, the substrate is not required to be transparent to the incident laser light. As the plastic material, there may be mentioned, for example, polycarbonate resin, polyolefin resin, acrylic resin, epoxy resin, and the like.

The thickness of the substrate is preferably around 0.5 mm to 1.2 mm. In the case of CD media, generally a 1.2 mm thick substrate is used. Further, in the case of DVD media, a 0.6 mm thick substrate having a predetermined pit or a tracking guide groove formed on the surface thereof is used, and then a 0.6 mm thick dummy substrate is bonded to the above substrate.

On the surface of the substrate, generally a tracking guide groove having a predetermined tack pitch is formed. The track pitch varies depending on the wavelength of a recording/ reading light. CD optical recording media have a track pitch of generally 1.5 µm to 1.6 µm. Also, DVD recording media have a track pitch of generally 0.7µm to 0.8µm. Optical recording media for blue laser light have a track pitch of generally 0.2 µm to 0.5 µm. The depth of the tracking guide groove is generally 10 nm to 300 nm in the case of CD optical recording media, and is generally 10 nm to 200 nm in the case of DVD optical recording media. In the case of blue laser optical recording media, the depth is generally 10 nm to 200 nm.

When a plastic material is used for the substrate, a disk having the guide groove on the surface thereof is formed in a single step by injection molding. When metal, glass, or the like is used, the groove is formed in a photo-curable or heat-curable thin resin layer disposed on the surface.
A recording/reading area is configured in the recording/reading functional layer. When the recording/reading functional layer is a disk plate with a center hole, the recording/reading area is provided generally in the region between an internal circle that is larger than the inside diameter and an outer circle that is smaller than the outside diameter.

### Others:

In the aforementioned "Example of read only medium", "Example 1 of write once read many medium", "Example 2 of write once read many medium", and "Example 1 of rewritable medium", from the viewpoint of increasing the recording capacity, plural recording layers may be disposed in some cases. When plural recording layers are disposed, considering the recoding capacity, the number of the recording layers is generally 2 or more, and preferably 3 or more, whereas the number of the recording layers is generally 5 or less.

### Example

The present exemplary embodiments are explained in more detail by the following Examples, but the present exemplary embodiments are not limited by the Examples. In the Examples, Comparative Examples, and Tables, all of part(s) or % is on the weight basis, if not otherwise noted.

### (1) Preparation of optical recording medium

A polycarbonate resin substrate 1.2 mm thick having a groove with 0.45 µm width and 155 nm depth was obtained by injection molding. A fluorinated alcohol solution of a metal-containing azo dye was spin-coated on the substrate, and dried for 15 minutes at 90°C to form a 70 nm thick recording layer. After that, on the recording layer, a 70 nm thick reflection layer was formed by sputtering silver (Ag). Further, on the reflection layer, a UV curable resin ("SD-394", manufactured by Dainippon Ink and Chemicals, Inc.) containing an acrylate monomer as a main component was spin-coated and cured by ultraviolet (UV)-light irradiation to form a 7 µm thick protection layer. In this way, a recording/reading functional layer (CD-R, in this example) was prepared.

As shown in Table 1, a resin composition prepared in advance with a predetermined composition was coated on the protection layer of the CD-R to prepare a print-receiving layer that was composed of a first filler-containing layer, a second filler-containing layer, and a filler-free layer. In this way, an optical recording medium for evaluation was prepared. Further, for comparison, an optical recording medium having no filler-free layer was also prepared. Further, optionally, an underlying layer was disposed between the protection layer and the first filler-containing layer of the CD-R. Still further, a single-layer structure consisting of the first filler-containing layer and the second filler-containing layer was also prepared for evaluation.

In Example 7 described later, prior to forming the print-receiving layer, an underlying layer was disposed on the surface of the protection layer of the CD-R. The material used for the underlying layer was "Raycure Ink VID F29 TH" (in Table 3, represented as "F29") manufactured by Jujo Chemical Co., Ltd. The underlying layer was prepared as follows: a resin composition of the underlying layer material was coated on the surface of the protection layer of the CD-R by screen-printing using a 300 mesh count screen; then the resulting coating was cured by irradiating a UV with 300 mJ/cm² of energy.

On the other hand, except Example 7 described later, the first filler-containing layer was prepared by coating a resin composition on the surface of the protection layer of the CD-R by screen-printing using a 300 mesh count screen; then the resulting coating was cured by irradiating a UV with 300 mJ/cm² of energy. Here, the first filler-containing layer in Example 6 described later was prepared using a 350 mesh count screen.

The second filler-containing layer was prepared as follows: a predetermined resin composition was coated on the first filler-containing layer under the same conditions as in the preparation of the first filler-containing layer; then the resulting coating was cured. Here, the second filler-containing layer in Example 6 described later was prepared using a 420 mesh count screen. Further, in Example 7 described later, no second filler-containing layer was disposed. Namely, in Example 7, the experiment was performed using a single-layered structure of the filler-containing layer.

The filler-free layer was prepared as follows: a predetermined resin composition was coated on the second filler-containing layer by screen-printing using a 420 mesh count screen; then the resulting coating was cured by irradiating a UV with 300 mJ/cm² of energy.
In the course of preparing each layer, the time (the leveling time) between coating of each resin composition and curing of the resulting coating by UV irradiation was selected to be about 3 seconds or about 15 seconds.

**[Table 1]**

| | Resin composition | | | | | | | | | | | |
|---|---|---|---|---|---|---|---|---|---|---|---|---|
| Unit: wt% | Coating solution for first filler-containing layer | | | Coating solution for second filler-containing layer | | | Coating solution for filler- free layer | | Coating solution containing inorganic filler in coating solution for filler-free layer | | | |
| | W | GW | XW | Q4 | S | Q5 | P1 | P4 | P11 | P12 | P13 | P14 |
| Composition name | | | | | | | | | | | | |
| Hydrophilic urethane oligomer | 8 | | | 5 | 35 | 14 | | 10 | | | | |
| Hydrophobic urethane oligomer | 11 | 19 | 23 | | | | | | | | | |
| Hydrophilic acryl monomer | 30 | 29 | 38, | 56 | 48 | 51 | 69 | 54 | 67 | 65 | 65 | 61 |
| PVP-VA copolymer resin (* 1) | 2 | 4 | 4 | 5 | 2 | 5 | | | | | | |
| Alkylated PVA resin (*2) | | | | | | | 20 | 25 | 20 | 19 | 19 | 18 |
| Cation fixing agent | 4 | 2 | 2 | 2 | 2 | 2 | 2 | 2 | 2 | 2 | 2 | 2 |
| Photo-polymerization initiator | 5 | 5 | 5 | 5 | 5 | 5 | 5 | 5 | 5 | 5 | 5 | 5 |
| Surfactant | 2 | 3 | 3 | 5 | 3 | 5 | 4 | 4 | 4 | 4 | 4 | 4 |
| Silica fine powder | | | | 9 | | | | | 2 | 5 | | |
| Synthetic talc | | | | 14 | | 18 | | | | | 5 | 10 |
| Alumina fine powder | | | | | 5 | | | | | | | |
| Titanium oxide | 38 | 38 | 25 | | | | | | | | | |
| | 100 | 100 | 100 | 100 | 100 | 100 | 100 | 100 | 100 | 100 | 100 | 100 |

| | | | | | | | | | | | | |
|---|---|---|---|---|---|---|---|---|---|---|---|---|
| *1 ··· Poly(vinylpyrrolidone-vinyl acetate) copolymer *2 ··· Alkylated polyvinylpyrrolidone resin | | | | | | | | | | | | |

Silica fine powder: average particle diameter of 2 µm, maximum diameter of 10 µm
Synthetic talc: average particle diameter of 3 µm, maximum diameter of 12 µm
Alumina fine powder: average particle diameter of 0.06 µm
Titanium oxide: average primary particle diameter of 0.2 µm to 0.3 µm (aggregated secondary particle diameter of 5 to 10 µm in ink)

### (2) Gloss level measurement

The gloss level of the surface of the print-receiving layer formed on the optical recording medium for evaluation was evaluated using a given gloss level meter (Glossmeter: PG-1M, manufactured by Nippon Denshoku Industries Co., Ltd.) in accordance with JIS Z8741 (ISO 2813, ASTM D523, and DIN 67530), in terms of a gloss level at an incident angle of 20 degree.

### (3) Surface roughness measurement

The surface roughness Ra (arithmetic average roughness) of the optical recording medium surface was evaluated using a given surface roughness tester (Surface roughness tester: Surftest SJ-201P, manufactured by Mitutoyo Corp.) in accordance with JIS B0601.

### (4) Ink acceptability evaluation

### (a) Ink bleeding evaluation

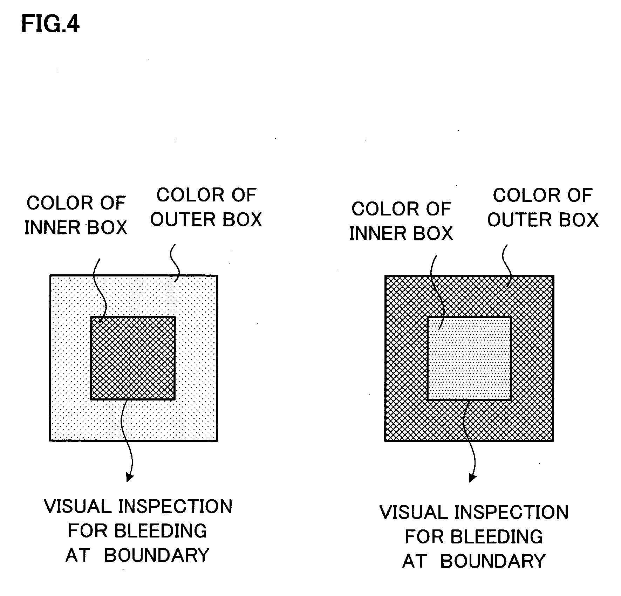

Using an inkjet printer (SignaturePro, manufactured by Primera Technology, Inc.), on the print-receiving layer of the optical recording medium for evaluation, 6 combinations of colors selected from four different color inks (black, cyan, magenta, and yellow) were printed as shown in Table 2. On the print-receiving layer, as shown in FIG. 4, the six combinations were printed in such a manner that the color of a 10 mm square outer box (outer box color) was opposite to the color of a 5 mm square inner box (inner box color). The outer box and inner box were set to be in contact with each other in such a manner that the two colors were easily mixed up and that ink bleeding easily developed and expanded. Twelve combinations of boxes may be arranged. For each combination, the boundary between the outer box and inner box was subjected to visual inspection and evaluated for the magnitude of bleeding in accordance with the following evaluation criteria.
Good: no ink bleeding was observed
Do: ink bleeding was slightly observed
Poor: ink bleeding was observed

**[Table 2]**

| Printed specimen | Combination | 1 | 2 | 3 | 4 | 5 | 6 |
|---|---|---|---|---|---|---|---|
| 1 | Outer box | Black | Black | Black | Cyan | Cyan | Magenta |
| | Inner box | Cyan | Magenta | Yellow | Magenta | Yellow | Yellow |
| 2 | Outer box | Cyan | Magenta | Yellow | Magenta | Yellow | Yellow |
| | Inner box | Black | Black | Black | Cyan | Cyan | Magenta |

### (b) Evaluation of ink fixing property

Similarly to the aforementioned "Ink bleeding evaluation", the print-receiving layer of the optical recording medium was inkjet-printed for evaluation. After printing, the printed specimen was dried at 25°C and 50% RH for 24 hours, further left under static conditions for 24 hours in an atmosphere at 30°C and 90% RH. Ink bleeding was evaluated similarly to the aforementioned "Ink bleeding evaluation". The smaller the ink bleeding is, the better the ink fixing property is.
Good: adequate ink fixing property
Poor: inadequate ink fixing property

### (c) Evaluation of ink drying property

With an inkjet printer (SignaturePro, manufactured by Primera Technology, Inc.), on the print-receiving layer surface of the optical recording medium for evaluation, using four different color inks (black, cyan, magenta, and yellow), a 12 mm square was printed respectively. After printing, the square was left for 30 seconds, 1 minute, 3 minutes, 5 minutes, 10 minutes, 20 minutes, 30 minutes, 40 minutes, 50 minutes, and 60 minutes. After every leaving time, a plain paper (high-quality inkjet reversible paper: KA4250NPD, manufactured by Epson Co., Ltd.) was put on the printed square and rubbed three times with a finger with about 2 kg force to visually confirm whether the ink of each color was transferred to the plain paper. The leaving time until the ink of each color became not to be transferred was determined as a drying time. The specimen that provided a total drying time of four colors of 30 minutes or less of was evaluated as having good drying property (Good), and the specimen that provided the total drying time of 30 minutes or more was evaluated as having poor drying property (Poor).

### (5) Measurement of the thickness of the print-receiving layer

The thickness of a recording/reading functional layer prepared in advance was measured, and then a print-receiving layer was formed on the recording/reading functional layer. The thickness of the optical recording medium thus prepared was measured for evaluation. The difference in the thickness between the recording/reading functional layer and the optical recording medium was selected as the thickness of the print-receiving layer. The thickness was measured with a digital micrometer (manufactured by SONY Corp.).
In order to confirm the thickness of each layer composing the print-receiving layer, the following experiments were carried out. A single layer of each layer was formed under the same coating and curing conditions as those of forming the print-receiving layer. Then, the thickness of each single layer was measured. The results are shown in Table 3. The total thickness of each single layer was deviated from the whole thickness of the print-receiving layer by about minus 4 µm to about plus 4 µm.

### Examples 1 to 8, Comparative Examples 1 to 3

For each optical recording medium having a print-receiving layer that was prepared using a resin composition shown in Table 1 and had a composition shown in Table 3, the gloss level, surface roughness (Ra), ink bleeding property, ink fixing property, ink drying property, and print-receiving layer thickness were measured. The results are shown in Table 3.

**[Table 3]**

| | | Underlying layer | Coating solution (single layer thickness/ µm) *1 | | | Leveling time (sec) | Ra (µm) | Gloss level (20°) | Print-receiving layer thickness (µm) | Ink acceptability | | |
|---|---|---|---|---|---|---|---|---|---|---|---|---|
| | | | First filler-containing layer | Second filler-containing layer | Filler-free layer | | | | | Bleeding | Drying property | Fixing Property |
| Example 1 | 1-1 | - | W(12) | Q5(12) | P1 (7) | 3 | 0.36 | 51.7 | 30 | Good | Good | Good |
| | 1-2 | - | W(12) | Q5(12) | P4(7) | 3 | 0.37 | 58.2 | 31 | Good | Good | Good |
| Example 2 | 2-1 | - | W(12) | Q5(12) | P4(7) | 15 | 0.21 | 69.4 | 30 | Good | Good | Good |
| Example 3 | 3-1 | - | GW(11) | S(9) | P1(7) | 15 | 0.30 | 63.5 | 24 | Good | Good | Good |
| | 3-2 | - | GW(11) | S(9) | P4(7) | 15 | 0.33 | 55.6 | 25 | Good | Good | Good |
| Example 4 | 4-1 | - | W(12) | Q4(11) | P1 (7) | 3 | 0.45 | 38.2 | 33 | Good | Good | Good |
| | 4-2 | - | W(12) | Q4(11) | P4(7) | 3 | 0.49 | 35.4 | 34 | Good | Good | Good |
| Example 5 | 5-1 | - | W (12) | S(9) | P1(7) | 15 | 0.39 | 48.0 | 24 | Good | Good | Good |
| | 5-2 | - | GW(11) | Q4(11) | P1(7) | 15 | 0.34 | 48.9 | 25 | Good | Good | Good |
| | 5-3 | - | GW(11) | Q4(11) | P4(7) | 15 | 0.46 | 35.7 | 26 | Good | Good | Good |
| Example 6 | 6-1 | - | W(7) | Q5(7) | P4(7) | 15 | 0.34 | 48.4 | 18 | Good | Good | Poor |
| Example 7 | 7-1 | F29 | Q4 *2 (11) | | P4(7) | 15 | 0.27 | 72.4 | 18 | Good | Good | Poor |
| Example 8 | 8-1 | - | XW(11) | Q 4(11) | P4(7) | 15 | 0.30 | 58.2 | 27 | Good | Good | Good |
| Comparative Example 1 | 1-1 | - | W(12) | Q5(12) | - | - | 0.31 | 11.5 | - | - | - | - |
| Comparative Example 2 | 2-1 | - | W(12) | Q4(11) | - | - | 0.96 | 1.30 | - | - | - | - |
| Comparative Example 3 | 3-1 | - | GW(11) | Q4(11) | P11(8) | 15 | 0.32 | 24.7 | 26 | - | - | - |
| | 3-2 | - | GW(11) | Q4(11) | P12(8) | 15 | 0.40 | 11.3 | 27 | - | - | - |
| | 3-3 | - | GW(11) | Q4(11) | P13(8) | 15 | 0.33 | 27.9 | 26 | - | - | - |
| | 3-4 | - | GW(11) | Q4(11) | P14(8) | 15 | 0.32 | 20.5 | 27 | - | - | - |

| | | | | | | | | | | | | |
|---|---|---|---|---|---|---|---|---|---|---|---|---|
| * 1 ··· The thickness was obtained by measuring separately each layer of the first filler-containing layer, the second filler-containing layer, and filler-free layer. *2 ··· The filler-containing layer had a single-layer structure. | | | | | | | | | | | | |

From the results shown in Table 3, the optical recoding medium (Examples 1 to 8) that has the predetermined print-receiving layer on the face of the recording/reading functional layer of CD-R opposite to the incident side of recording/reading light, allows the print-receiving layer to exhibit a high gloss level while an adhesion between the print-receiving layer and the recording/reading functional layer is secured adequately. In addition, the results show that an adequate printing performance may be also obtained. Note that, the optical recording media of Examples 6 and 7 provided unsatisfactory results in the fixing property. The unsatisfactory results may be attributed to forming a thin print-receiving layer. Therefore, in Examples 6 and 7, it may be expected that the fixing property is improved by increasing the thickness of the print-receiving layer.

On the other hand, in the case (Comparative Examples 1 and 2) where no filler-free layer without containing organic filler or inorganic filler was formed on the surface of the optical recording medium on which printing with a water-based ink is performed, the print-receiving layer was shown to exhibit no adequate gloss level. Further, the results show that, when a filler was admixed in the filler-free layer, the gloss level of the print-receiving layer surface became insufficient (Comparative Example 3).

As explained above, an optical recording medium in accordance with the present invention has a print-receiving layer of a predetermined resin composition on the face of a recording/reading functional layer opposite to the incident side of recording/reading light, and allows the print-receiving layer to exhibit a high gloss level and to provide adequate printing performance, while an adhesion between the print-receiving layer and the recording/reading functional layer is secured adequately.

### Brief Description of the Drawings

FIGURE 1 is a drawing (cross-sectional view) for explaining an optical recording medium 100 (a substrate surface incident type CD medium in this example) in accordance with the present exemplary embodiment.
FIGURE 2 is a drawing (cross-sectional view) for explaining the information recording layer (CD-R is exemplified in this figure) formed on the surface of the recording/reading functional layer in the optical recording medium in accordance with the present exemplary embodiment, and the print-receiving layer.
FIGURE 3 is a drawing for explaining a second exemplary embodiment of the print-receiving layer 2 disposed on the optical recording medium in accordance with the present exemplary embodiment.
FIGURE 4 is a drawing for explaining a method of ink bleeding evaluation.

### Description of Reference Numerals and Signs

10···recording/reading functional layer
11···substrate
12···information recording layer
20···print-receiving layer
21···filler-free layer
22···filler-containing layer
30···laser light
100,200···optical recording medium
111···tracking guide groove
121···recording layer
122···reflection layer
123···protection layer
222···first filler-containing layer
221···second filler-containing layer
12F···protective layer surface
22F···filler-containing layer surface
21F···filler-free layer surface

## Claims

1. An optical recording medium comprising:
a recording/reading functional layer having a capability of at least recording or reading information by light irradiation; and
a print-receiving layer having a capability of being printed with an ink, formed on the face opposite to the light incident face of the recording/reading functional layer;
wherein the print-receiving layer has a filler-containing layer containing a filler, and
a filler-free layer containing no filler disposed on the side of a faceon which the ink is adsorbed at first.

2. The optical recording medium according to claim 1, wherein
the print-receiving layer is composed of:
a filler-containing layer containing an organic filler or an inorganic filler, disposed on the side of the recording/readingfunctional layer, and
a filler-free layer containing no organic filler or inorganic filler, disposed on the faceon which the ink is adsorbed at first.

3. The optical recording medium according to claim 1 or 2, wherein
the gloss level of the face is, the ink being adsorbed at first on the face 30 or more.

4. The optical recording medium according to any of claims 1 to 3, wherein
the thickness of the print-receiving layer is 5 µm or more and 100 µm or less.

5. The optical recording medium according to any of claims 1 to 4, wherein
the print-receiving layer contains a UV curable resin.

6. The optical recording medium according to any of claims 1 to 5, wherein
the filler-free layer is composed of a single layer.

7. The optical recording medium according to any of claims 1 to 6, wherein
the filler-free layer contains a UV curable resin and a hydrophilic resin.

8. The optical recording medium according to claim 7, wherein
the hydrophilic resin is an alkyl-modified polyvinylpyrrolidone.

9. The optical recording medium according to any of claims 1 to 8, wherein
the filler-containing layer has a first filler-containing layer formed on the side of the recording/reading functional layer and a second filler-containing layer formed on the side of the filler-free layer,
the amount of the organic filler or inorganic filler contained in the second filler-containing layer being less than the amount of the organic filler or inorganic filler contained in the first filler-containing layer.

10. The optical recording medium according to any of claims 1 to 9, wherein
the filler-containing layer is composed of:
the first filler-containing layer containing the organic filler or inorganic filler in an amount of from 30 wt% to 70 wt%, formed on the side of the recording/reading functional layer, and
the second filler-containing layer containing the organic filler or inorganic filler in an amount of from 1 wt% to 30 wt%, formed on the side of the filler-free layer.

11. The optical recording medium according to any one of claims 1 to 10,
wherein
the filler-containing layer contains a UV curable resin, a hydrophilic resin, and an organic filler or inorganic filler.

12. The optical recording medium according to claim 11, wherein
the hydrophilic resin is a poly(vinylpyrrolidone-vinyl acetate) copolymer.

13. A UV curable ink composition comprising:
an alkyl-modified polyvinylpyrrolidone;
a hydrophilic monomer; and
a photo-polymerization initiator.

14. The UV curable ink composition according to claim 13, further comprising a fixing agent.

15. The UV curable ink composition according to claim 13 or 14, further comprising a polymerizable oligomer.

16. The UV curable ink composition according to any of claims 13 to 15, further comprising a surfactant.

17. The UV curable ink composition according to any of claims 13 to 16, comprising an alkyl-modified polyvinylpyrrolidone in an amount of 5 wt% or more and 50 wt% or less.
